Europäisches Patentamt

European Patent Office

Office européen des brevets

(19)

(11) Veröffentlichungsnummer : **0 356 807 B1**

(12) **EUROPÄISCHE PATENTSCHRIFT**

(45) Veröffentlichungstag der Patentschrift :
**20.05.92 Patentblatt 92/21**

(51) Int. Cl.$^5$ : **C25B 1/22,** C25B 1/28,
C01G 37/14

(21) Anmeldenummer : **89115035.1**

(22) Anmeldetag : **15.08.89**

(54) Verfahren zur Herstellung von Alkalidichromaten und Chromsäure.

(30) Priorität : **27.08.88 DE 3829122**

(43) Veröffentlichungstag der Anmeldung :
**07.03.90 Patentblatt 90/10**

(45) Bekanntmachung des Hinweises auf die
Patenterteilung :
**20.05.92 Patentblatt 92/21**

(84) Benannte Vertragsstaaten :
**DE ES FR GB IT**

(56) Entgegenhaltungen :
**GB-A- 2 051 868**
**CHEMICAL ABSTRACTS, Band 87, Nr. 20, 14.**
**Novemeber 1977, Seite 463, Zusammenfas-**
**sung Nr. 159202k, Columbus, Ohio, US;**

(73) Patentinhaber : **BAYER AG**
**W-5090 Leverkusen 1 Bayerwerk (DE)**

(72) Erfinder : **Klotz, Helmut, Dr.**
**Pappelweg 1**
**W-5060 Bergisch-Gladbach 2 (DE)**
Erfinder : **Pinter, Hans Dieter**
**Eisenacher Strasse 14**
**W-5024 Pulheim 2 (DE)**
Erfinder : **Weber, Rainer, Dr.**
**Heymannstrasse 36**
**W-5090 Leverkusen 1 (DE)**
Erfinder : **Block, Hans-Dieter, Dr.**
**Biesenbach 49**
**W-5090 Leverkusen 3 (DE)**
Erfinder : **Lönhoff, Norbert, Dr.**
**Paul-Klee-Strasse 60**
**W-5090 Leverkusen 1 (DE)**

EP 0 356 807 B1

## Beschreibung

Die Erfindung betrifft Verfahren zur Herstellung von Alkalidichromaten und Chromsäure durch Elektrolyse von Monochromat- und/oder Dichromat-Lösungen in Elektrolysezellen, deren Anoden- und Kathodenräume durch Kationenaustauschermembranen getrennt sind.

Gemäß der US-A-3 305 463 und der CA-A-739 447 erfolgt die elektrolytische Herstellung von Alkalidichromaten und Chromsäure ($CrO_3$) in Elektrolysezellen, deren Elektrodenräume durch eine Kationenaustauschermembran getrennt sind.

Bei der Erzeugung von Alkalidichromaten werden Alkalimonochromtlösungen oder - Suspensionen in den Anodenraum der Zelle eingeleitet und in Alkalidichromatlösungen umgewandelt, indem Alkaliionen selektiv durch die Membran in den Kathodenraum überführt werden. Zur Herstellung von Chromsäure werden Alkalidichromat- oder Alkalimonochromatlösungen oder eine Mischung von Alkalidichromat und Alkalimonochromatlösungen in den Anodenraum eingeleitet und in Chromsäure-haltige Lösungen überführt. In der Regel kommen für diese Prozesse Natriummonochromat- und/oder Natriumdichromatlösungen zum Einsatz. Im Kathodenraum wird bei beiden Prozessen eine alkalische Alkaliionen-haltige Lösung erhalten, die beispielsweise aus einer wäßrigen Natriumhydroxidlösung oder, wie in der CA-A-739 447 beschrieben, aus einer wäßrigen Natriumcarbonat-haltigen Lösung bestehen kann.

Zur Erzeugung von Alkalidichromat- oder Chromsäurekristallen werden die in den Anodenräumen der Zellen gebildeten Lösungen eingeengt, wobei die Kristallisation von Natriumdichromat beispielsweise bei 80°C und die von Chromsäure bei 60-100°C erfolgen kann. Die auskristallisierten Produkte werden abgetrennt, gegebenenfalls gewaschen und getrocknet.

Bei Durchführung dieses Verfahrens kommt es zu Einlagerungen von Verbindungen mehrwertiger Ionen, insbesondere Erdalkaliionen, in der Membran, die deren Funktionsfähigkeit bereits nach kurzer Zeit verschlechtern, bis hin zum völligen Ausfall der Membran. Ursache dieser Einlagerungen sind geringe Gehalte an mehrwertigen Kationen, insbesondere Calcium- und Strontiumionen, in den als Elektrolyt verwendeten Natriumdichromat- und/oder Natriummonochromatlösungen, wie sie in technischen Verfahren, beschrieben in Ullmann's Encyclopedia of Industrial Chemistry, 5 th Edition, Volume A 7, 1986, Seite 67-97, erhältlich sind.

Die Aufgabe der Erfindung bestand darin, Verfahren zur Herstellung von Alkalidichromaten und Chromsäure durch Elektrolyse bereitzustellen, die die beschriebenen Nachteile nicht aufweisen.

Überraschend wurde nun gefunden, daß die genannten Nachteile nicht auftreten, wenn dem Kathodenraum kontinuierlich eine Chromat-haltige Lösung mit einem pH von ca. 3 bis 10 zugeführt wird.

Gegenstand der Erfindung sind Verfahren zur Herstellung von Alkalidichromaten und Chromsäure durch Elektrolyse von Monochromat- und/oder Dichromatlösungen in Elektrolysezellen, deren Anoden-und Kathodenräume durch Kationenaustauschermembranen getrennt sind, welches dadurch gekennzeichnet ist, daß dem Kathodenraum kontinuierlich eine Chromat-haltige Lösung mit einem pH-Wert von ca. 3 bis 10 zugeführt wird.

Die Chromat-haltige Lösung kann eine Alkalimonochromat- oder Alkalidichromatlösung sein, wie sie in technischen Verfahren erhalten wird. Es ist aber auch möglich, Mischungen beider Chromatlösungen einzusetzen. Besonders bevorzugt sind Chromat-haltige Lösungen mit pH-Werten von 3,5 bis 6,0. Im Prinzip ist es auch möglich, Chromat-haltige Lösungen mit niedrigerem pH-Wert als 3, somit Chromsäure bzw. Polychromat-haltige Lösungen zu benutzen.

Bei der Durchführung des erfindungsgemäßen Verfahrens werden Einlagerungen vermieden, wodurch die Lebensdauer der Membran erheblich verlängert wird, was einen kontinuierlichen und dauerhaften Betrieb der Elektrolyse gewährleistet. Darüber hinaus wird die Stromausbeute deutlich verbessert.

Die im Kathodenraum gebildete Lösung kann vollständig bei der Herstellung von Alkalidichromat nach dem Kohlendioxid-, Schwefelsäure- oder Elektrolyseverfahren eingesetzt werden.

Das erfindungsgemäße Verfahren wird anhand der folgenden Beispiele näher erläutert:

Die in den Beispielen verwendeten Elektrolysezellen bestanden aus Anodenräumen aus Rein-Titan und Kathodenräumen aus Edelstahl. Als Membranen wurden Kationenaustauschermembranen der Firma Du Pont mit der Bezeichnung Nafion® 324 verwendet. Die Kathoden bestanden aus Edelstahl und die Anoden aus Titanstreckmetall mit einer elektrokatalytisch aktiven Schicht aus Tantaloxid und Iridiumoxid. Solche Anoden sind beispielsweise in der US-A 3 878 083 beschrieben.

Der Abstand der Elektroden zur Membran betrug in allen Fällen 1,5 mm. In die Anodenräume wurden Natriumdichromatlösungen mit einem Gehalt von 800 g/l $Na_2Cr_2O_7 \cdot 2\ H_2O$ und mit den in den einzelnen Beispielen aufgeführten Gehalten an Verunreinigungen eingeleitet.

Den Kathodenräumen wurde, wenn nicht anders in den Beispielen vermerkt, Wasser mit einer solchen Geschwindigkeit zugeführt, so daß 20 %ige Natronlauge die Zellen verließ. Die Elektrolysetemperatur war in allen Fällen 80°C und die Stromdichte betrug 3 kA/m² der der Membran zugewandten projizierten Fläche von Anode und Kathode, wobei diese Fläche 11,4 cm · 6,7 cm betrug.

Beispiel 1

Die bei diesem Versuch verwendeten Natriumdichromatlösungen wiesen folgende Gehalte an Verunreinigungen auf:

| | | |
|---|---|---|
| Calcium: | 290-293 | mg / l |
| Strontium: | kleiner 0,5 | mg / l |
| Magnesium: | kleiner 0,5 bis 1,7 | mg / l |
| Sulfat, $SO_4^{2-}$: | 0,17 bis 1,47 | g / l |

Diese Lösungen wurden in der beschriebenen Elektrolysezelle elektrolytisch in eine chromsäurehaltige Lösung umgewandelt. Die Geschwindigkeit des Einleitens der Natriumdichromatlösungen wurde so gewählt, daß sich in dem die Zelle verlassenden Anolyten ein molares Verhältnis von Natriumionen zu Chrom(VI) von ca. 0,8 einstellte. Während des Versuchs stieg die Zellspannung von anfänglich 4,7 V rasch auf 6,2 V an und errreichte nach 18 Tagen 7,0 V. Die durchschnittliche Stromausbeute lag während dieser Zeit bei ca. 68 %. Am 25. Tag fiel die Zellspannung auf 3,8 V und die Stromausbeute auf ca. 46 % ab, was anzeigte, daß die Funktionsfähigkeit der Membran erheblich verschlechtert war. Nach Beendigung des Versuchs nach 29 Tagen war die Membran vollständig mit weißen Einlagerungen durchsetzt, die im wesentlichen aus Calciumhydroxid bestanden. Darüber hinaus wies die Membran an mehreren Stellen ca. 3 bis 5 mm große Blasen auf, von denen einige aufgeplatzt waren. Die Membran war demnach zerstört.

Beispiel 2

Bei diesem Versuch wurde eine Natriumdichromatlösung mit folgenden Gehalten an Verunreinigung eingesetzt :

| | | |
|---|---|---|
| Calcium: | 290 | mg / l |
| Strontium: | kleiner 0,5 | mg / l |
| Magnesium: | kleiner 0,5 | mg / l |
| Sulfat: | 154 | mg / l |

Die Geschwindigkeit des Einleitens dieser Lösung wurde im Unterschied zum Beispiel 1 so gewählt, daß sich im die Zelle verlassenden Anolyten ein molares Verhältnis von Natriumionen zu Chrom(VI) von ca. 0,4 einstellte.

Während des Versuchs stieg die Zellspannung von anfänglich 4,8 V innerhalb von 17 Tagen auf 6,3 V an. Die durchschnittliche Stromausbeute lag in diesem Zeitraum bei ca. 33 %. Am 18. Tag ging die Zellspannung auf 3,8 V und die Stromausbeute auf ca. 19 % zurück, was wie im Beispiel 1 eine Störung der Funktionsfähigkeit dem Membran anzeigte. Nach Beendigung des Versuchs wies die Membran zwar weniger weiße Einlagerungen auf, jedoch hatten sich auch hier ca. 3 bis 5 mm große Blasen gebildet, von denen einige aufgeplatzt waren. Die Membran war demnach zerstört.

Beispiel 3

In diesem erfindungsgemäßen Beispiel wurde eine Natriumdichromatlösung mit folgenden Gehalten an Verunreinigungen eingesetzt:

| Calcium: | 290 | mg / l |
|---|---|---|
| Strontium: | kleiner 0,5 | mg / l |
| Magnesium: | kleiner 0,5 | mg / l |
| Sulfat: | 154 | mg / l |

Im Unterschied zu den Beispielen 1 und 2 wurde dem Kathodenraum anstelle von Wasser die Natriumdichromatlösung zugeführt, die auch in den Anodenraum eingeleitet wurde. Die Geschwindigkeit des Einleitens wurde dabei so eingestellt, daß sich in dem die Zelle verlassenden Katholyten ein pH-Wert von 6,5 vis 6,7 einstellte. In den Anordenraum wurde die Natriumdichromatlösung mit einer solchen Geschwindigkeit eingeleitet, so daß sich im Anolyten ein molares Verhältnis von Natriumionen zu Chrom(VI) von ca. 0,6 einstellte. Während des Versuchs stieg die Zellspannung innerhalb von 27 Tagen nur unwesentlich von anfänglich 4,8 V auf 5,0 V an. Die durchschnittliche Stromausbeute lag in diesem Zeitraum bei ca. 64 %. Eine am 27. Tag durchgeführte Membranuntersuchung zeigte, daß weder weiße Einlagerungen in der Membran noch Blasen gebildet wurden. Die Membran war demnach, wie auch die nahezu konstant gebliebene Zellspannung zeigt, voll funktionsfähig. Beim Wiederbeginn des Versuches am 28. Tag stellt sich wieder die Zellspannung vom 27. Tag von 5,0 V ein. Neben der Verhinderung der Bildung von Einlagerungen und von Blasen, wird durch Einleitung von Natriumdichromat in den Kathodenraum der Zelle anstelle von Wasser die Stromausbeute deutlich verbessert, wie der Vergleich mit folgenden Beispiel zeigt.

Beispiel 4

Die bei diesem Versuch verwendeten Natriumdichromatlösungen wiesen folgende Gehalte an Verunreinigungen auf:
Calcium:       0,5 bis 1,5 mg/l
Strontium:     kleiner 0,5 mg/l
Magnesium:   kleiner 0,5 mg/l
Sulfat:          178 bis 189 mg/l
Die sonstigen Versuchsbedingungen waren, abgesehen von dem Einleiten von Wasser anstelle Natriumdichromatlösung in den Kathodenraum, die gleichen wie in Beispiel 3.

Während des Versuchs stieg die Zellspannung innerhalb von 27 Tagen von anfänglich 4,5 V auf 5,2 V an. Die durchschnittliche Stromausbeute lag in diesem Zeitraum bei 61 %, also merklich niedriger als im Beispiel 3.

**Patentansprüche**

1. Verfahren zur Herstellung von Alkalidichromaten und Chromsäure durch Elektrolyse von Monochromat- und/oder Dichromatlösungen in Elektrolysezellen, deren Anoden- und Kathodenräume durch Kationenaustauschermembranen getrennt sind, dadurch gekennzeichnet, daß dem Kathodenraum kontinuierlich eine Chromat-haltige Lösung mit einem pH-Wert von ca. 3 bis 10 zugeführt wird.

2. Verfahren gemäß Anspruch 1, dadurch gekennzeichnet, daß der pH-Wert der Chromat-haltigen Lösung 3,5 bis 6,0 ist.

**Claims**

1. A process for the production of alkali metal dichromates and chromic acid by electrolysis of monochromate and/or dichromate solutions in electrolysis cells of which the anode and cathode compartments are separated by ion exchanger membranes, characterized in that a chromate-containing solution having a pH value of about 3 to 10 is fed continuously to the cathode compartment.

2. A process as claimed in claim 1, characterized in that the pH value of the chromate-containing solution is in the range from 3.5 to 6.0.

**Revendications**

1. Procédé pour la fabrication de bichromates alcalins et d'acide chromique par électrolyse de solutions de monochromates et/or de bichromates dans des cellules d'électrolyse, dont les espaces anodique et cathodique sont séparés par des membranes échangeuses de cations, caractérisé en ce que l'on envoie en continu à l'espace cathodique une solution contenant un chromate d'un pH d'environ 3 à 10.

2. Procédé selon la revendication 1, caractérisé en ce que le pH de la solution contenant un chromate est de 3,5 à 6,0.